# EUROPÄISCHE PATENTSCHRIFT

(11) **EP 3 603 999 B1**
(45) Veröffentlichungstag und Bekanntmachung des Hinweises auf die Patenterteilung: **30.06.2021**
(21) Anmeldenummer: 19187772.9
(22) Anmeldetag: 23.07.2019
(51) Int. Cl.: B60D 1/64, B60Q 1/30, B60R 16/03

(54) **STANDLICHTSYSTEM UND FAHRZEUGANHÄNGER MIT DEM STANDLICHTSYSTEM**
STANDING LIGHT SYSTEM AND VEHICLE TRAILER USING THE STANDING LIGHT SYSTEM
SYSTÈME DE FEUX DE POSITION ET REMORQUE DE VÉHICULE POURVU DE SYSTÈME DE FEUX DE POSITION

(30) Priorität: 31.07.2018 DE 102018118438
(43) Veröffentlichungstag der Anmeldung: 05.02.2020
(73) Patentinhaber: HELLA GmbH & Co. KGaA, 59552 Lippstadt (DE)
(72) Erfinder: Berger, Julian, 59552 Lippstadt (DE)

(56) Entgegenhaltungen:
- DE-U1-202012 011 441
- US-A- 5 775 712
- US-A1- 2007 171 031

## Beschreibung

Die vorliegende Erfindung betrifft ein Standlichtsystem und einen von einem Zugfahrzeug abgekoppelten Fahrzeuganhänger mit dem Standlichtsystem.

Wird ein Fahrzeuganhänger von einem Zugfahrzeug abgekoppelt, können die Leuchtmittel durch das Zugfahrzeug nicht mehr mit Strom versorgt werden. Bei Dunkelheit oder schlechten Lichtverhältnissen kann dadurch eine Gefahrensituation für das Zugfahrzeug sowie den beteiligten Verkehr entstehen.

Im Stand der Technik sind deshalb Lösungen geschaffen worden, um den abgekoppelten bzw. abgestellten Fahrzeuganhänger weiterhin mit Strom für die Leuchtmittel zu versorgen. Die bekannten Lösungen weisen jedoch komplizierte elektrische Schaltungen auf, die aufwändig in die am Fahrzeuganhänger vorhandene Elektronik integriert werden müssen. Die Installation solcher Systeme ist damit nur zeitintensiv und entsprechend teuer realisierbar.

Ein wie vorstehend erwähntes System geht beispielsweise aus der deutschen Patentanmeldung DE 42 04 856 A1 hervor. Dort wird ein Standlichtsystem für einen abgestellten Fahrzeuganhänger vorgeschlagen, das nach dem Abstellen des Fahrzeuganhängers eingeschaltet wird und sich bei Tageslicht automatisch aus- und bei Dämmerungslicht selbstständig wieder einschaltet. Dies wird mit einer Relais-Schaltung gelöst, die in die Elektronik des Fahrzeuganhängers integriert ist. Weitere, gattungsgemäße Systeme können der US 5 775 712 A, der DE 20 2012 011441 US sowie der US 2007/171031 A1 entnommen werden.

Aufgabe der vorliegenden Erfindung ist es, der voranstehend beschriebenen Problematik zumindest teilweise Rechnung zu tragen. Insbesondere ist es Aufgabe der vorliegenden Erfindung, ein verbessertes Standlichtsystem sowie einen Fahrzeuganhänger mit einem solchen Standlichtsystem zu schaffen, wobei das Standlichtsystem einfach und kostengünstig in den Fahrzeuganhänger integrierbar ist sowie eine sichere und einfache Betriebsweise ermöglicht.

Die voranstehende Aufgabe wird durch die Patentansprüche gelöst. Insbesondere wird die voranstehende Aufgabe durch das Standlichtsystem gemäß Anspruch 1 und den Fahrzeuganhänger gemäß Anspruch 9 gelöst. Weitere Vorteile der Erfindung ergeben sich aus den Unteransprüchen, der Beschreibung und den Figuren. Dabei gelten Merkmale und Details, die im Zusammenhang mit dem Standlichtsystem beschrieben sind, selbstverständlich auch im Zusammenhang mit dem erfindungsgemäßen Fahrzeuganhänger und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Standlichtsystem für einen abgestellten bzw. von einem Zugfahrzeug abgekoppelten Fahrzeuganhänger zur Verfügung gestellt. Das Standlichtsystem weist eine Steuerbox mit einer integrierten Batterie zur Stromversorgung einer Lichtanordnung des abgestellten Fahrzeuganhängers sowie einem integrierten Steuergerät zum Steuern und/oder Regeln der Lichtanordnung auf. Das Standlichtsystem weist ferner eine Schaltanordnung mit wenigstens einem Schalter zum manuellen Ein- und Ausschalten der Lichtanordnung des abgestellten Fahrzeuganhängers über das Steuergerät, eine Fahrzeugverbindungsleitung für eine elektrische Verbindung zwischen der Lichtanordnung und einer Energiequelle eines Zugfahrzeugs, eine Steuerboxverbindungsleitung für eine elektrische Verbindung zwischen der Steuerbox und der Fahrzeugverbindungsleitung, und eine Schaltanordnungverbindungsleitung für eine elektrische Verbindung zwischen der Schaltanordnung und der Steuerbox auf. Erfindungsgemäße ist die Steuerbox mittels wenigstens einer manuell trennbaren Steckverbindung zwischen der Fahrzeugverbindungsleitung und der Schaltanordnung angeordnet.

Die Steuerbox mit der integrierten Batterie sowie dem integrierten Steuergerät ist separat zur Schaltanordnung, in einer Signal- und/oder Stromrichtung zwischen der Fahrzeugverbindungsleitung und der Schaltanordnung, angeordnet. Dadurch kann die Steuerbox besonders einfach in die bestehende Elektronik des Fahrzeuganhängers integriert werden. Mit Hilfe der vorgeschlagenen Modulbauweise kann in einem Fehlerfall der Steuerbox diese besonders einfach aus dem Standlichtsystem ausgebaut, repariert und wieder eingebaut werden. Dies wird insbesondere durch die wenigstens eine manuell trennbare Steckverbindung gewährleistet.

Unter der wenigstens einen manuell trennbaren Steckverbindung ist vorliegend wenigstens eine mechanisch trennbare Steckverbindung mit einem Stecker und einer Steckeraufnahme zu verstehen. D.h., die wenigstens eine manuell trennbare Steckverbindung kann von einem Nutzer, beispielsweise einem Fahrer des Zugfahrzeugs oder einem Mechaniker mit bloßen Händen, also ohne Werkzeug, getrennt, aber auch wieder zusammengesteckt werden. Die wenigstens eine Steckverbindung weist hierzu wenigstens einen männlichen Steckabschnitt bzw. einen Stecker und wenigstens einen weiblichen Steckabschnitt bzw. eine Steckeraufnahme auf, wobei der männliche Steckabschnitt zum zumindest teilweise formschlüssigen Einstecken in den weiblichen Steckabschnitt ausgestaltet ist.

Durch die separate Bereitstellung der Steuerbox zur Schaltanordnung können die jeweiligen Funktionsboxen an die jeweiligen Bedürfnisse angepasst ausgestaltet werden. So kann die Schaltanordnung, die vorzugsweise außen am Fahrzeuganhänger positioniert ist, relativ klein und widerstandsfähig gegen äußere Umwelteinflüsse ausgestaltet sein. Die Steuerbox kann innerhalb des Fahrzeuganhängers integriert bereitgestellt werden und muss demnach weniger gegen beispielsweise Vandalismus oder flüchtigen Fremdzugriff geschützt werden. Ferner kann die Steuerbox gezielt mit Schutzvorrichtungen für die Batterie und/oder das Steuergerät ausgestaltet werden.

Gemäß einer vorteilhaften Ausgestaltungsvariante der vorliegenden Erfindung ist sowohl zwischen der Steuerbox und der Fahrzeugverbindungsleitung als auch zwischen der Steuerbox und der Schaltanordnung eine Steckverbindung ausgestaltet, sodass die Steuerbox besonders einfach zwischen die genannten Funktionsbauteile gesteckt bzw. integriert werden kann. Die jeweiligen Steckverbindungen können gleich oder unterschiedlich ausgestaltet sein. D.h., je nachdem, ob Daten und/oder nur Strom bzw. Spannung übertragen werden müssen, können die Steckverbindungen unterschiedlich ausgestaltet sein.

Die Steckverbindung kann vorliegend in Form eines Daten- und/oder Stromkabels mit geeigneten Steckern ausgestaltet sein. So kann sich von der Fahrzeugverbindungsleitung ein erstes Daten- und/oder Stromkabel mit einem ersten Steckerkopf und von der Steuerbox ein passendes zweites Daten- und/oder Stromkabel mit einem zum ersten Steckerkopf passenden zweiten Steckerkopf erstrecken, wobei der erste Steckerkopf mit dem zweiten Steckerkopf zum Herstellen und Trennen der gewünschten Daten- und/oder Stromverbindung manuell zusammensteckbar und auch manuell wieder trennbar sind. Die Steckverbindung ist deshalb vorzugsweise zweiteilig aufgebaut.

Die Batterie und das Steuergerät sind über die Steuerbox derart miteinander verbunden, dass über ein mehrpoliges Anschlusskabel in die und aus der Steuerbox das Potential der Batterie sowie die Daten bzw. Signale des Steuergeräts abgegriffen werden können.

Unter dem Standlichtsystem für den abgestellten Fahrzeuganhänger ist ein Standlichtsystem für einen von einer Energiequelle des Zugfahrzeugs abgekoppelten Fahrzeuganhänger zu verstehen. Unter der Lichtanordnung kann ein Beleuchtungssystem mit den Leuchtmitteln verstanden werden. Die Steuerboxverbindungsleitung und die Schaltanordnungverbindungsleitung können jeweils Strom-, Spannungs-, und/oder Datenleitungen aufweisen. Unter der elektrischen Verbindung kann eine Strom-, Spannungs- und/oder Daten- bzw. Signalverbindung verstanden werden.

Gemäß einer weiteren Ausführungsform der vorliegenden Erfindung ist es möglich, dass bei einem Standlichtsystem die Fahrzeugverbindungsleitung eine Lichtverbindungsleitung für eine elektrische Verbindung zu Leuchtmitteln der Lichtanordnung, eine Hauptversorgungsleitung, einen Verbindungsadapter und einen Hauptanschlussabschnitt für eine elektrische Verbindung zwischen dem Standlichtsystem und der Energiequelle des Zugfahrzeugs aufweist, wobei zwischen der Lichtverbindungsleitung und der Hauptversorgungsleitung, zwischen der Hauptversorgungsleitung und dem Verbindungsadapter, zwischen dem Verbindungsadapter und dem Hauptanschlussabschnitt, und/oder zwischen dem Verbindungsadapter und der Steuerboxverbindungsleitung jeweils eine Steckverbindung zum manuellen Herstellen und Trennen einer elektrischen Verbindung zwischen den jeweiligen Funktionsabschnitten ausgestaltet ist. Mit Hilfe der verschiedenen Leitungsabschnitte, die jeweils über die Steckverbindung miteinander verbunden werden können bzw. auch zerstörungsfrei wieder voneinander getrennt werden können, kann das Standlichtsystem besonders einfach am Fahrzeuganhänger integriert werden. Darüber hinaus können im Fehlerfall auf einfache Weise einzelne Leitungsabschnitte getauscht werden. Ein aufwändiges Aufbrechen oder Aufschneiden von Leitungsabschnitten oder ein Gesamtausbau können dadurch verhindert werden. Das erfindungsgemäße Standlichtsystem ist demnach besonders wartungsfreundlich aufgebaut. Darunter, dass jeweils eine Steckverbindung zum manuellen Herstellen und Trennen einer elektrischen Verbindung zwischen den jeweiligen Funktionsabschnitten ausgestaltet ist kann verstanden werden, dass die Steckverbindung zum manuellen Herstellen und Trennen einer elektrischen Verbindung jeweils zwischen der Lichtverbindungsleitung und der Hauptversorgungsleitung, zwischen der Hauptversorgungsleitung und dem Verbindungsadapter, zwischen dem Verbindungsadapter und dem Hauptanschlussabschnitt, und/oder zwischen dem Verbindungsadapter und der Steuerboxverbindungsleitung ausgestaltet ist.

Weiterhin ist es möglich, dass bei einem Standlichtsystem gemäß der vorliegenden Erfindung die Fahrzeugverbindungsleitung eine Hauptversorgungsleitung, einen Y-förmigen oder im Wesentlichen Y-förmigen Verbindungsadapter und einen Hauptanschlussabschnitt zum elektrischen Verbinden des Standlichtsystems mit der Energiequelle des Zugfahrzeugs aufweist, wobei zwischen der Hauptversorgungsleitung und dem Verbindungsadapter, zwischen dem Verbindungsadapter und dem Hauptanschlussabschnitt, und/oder zwischen dem Verbindungsadapter und der Steuergerätverbindungsleitung jeweils eine Steckverbindung zum manuellen Herstellen und Trennen einer elektrischen Verbindung zwischen den jeweiligen Funktionsabschnitten ausgestaltet ist. Mit Hilfe des Y-förmigen Verbindungsadapters kann die Steuerbox besonders einfach in das Standlichtsystem integriert und im Bedarfsfall auch wieder aus diesem entfernt werden. Unter dem Y-förmigen Verbindungsadapter kann ein Y-Kabel zur Stromund/oder Datenübertragung verstanden werden, das an seinen drei Endabschnitten Steckanschlüsse, insbesondere mehrpolige Steckanschlüsse zur Strom- und/oder Datenübertragung, aufweist. Darunter, dass jeweils eine Steckverbindung zum manuellen Herstellen und Trennen einer elektrischen Verbindung zwischen den jeweiligen Funktionsabschnitten ausgestaltet ist kann verstanden werden, dass die Steckverbindung zum manuellen Herstellen und Trennen einer elektrischen Verbindung zwischen der Hauptversorgungsleitung und dem Verbindungsadapter, zwischen dem Verbindungsadapter und dem Hauptanschlussabschnitt, und/oder zwischen dem Verbindungsadapter und der Steuergerätverbindungsleitung ausgestaltet ist.

Darüber hinaus ist es bei einem erfindungsgemäßen Standlichtsystem möglich, dass das Steuergerät ein Umschaltmittel aufweist oder mit einem Umschaltmittel des Standlichtsystems in Signalverbindung steht, wobei das Umschaltmittel konfiguriert ist, automatisch in einen Abstellbetrieb zu schalten, in welchem das Standlichtsystem durch die Batterie mit Strom versorgt wird, sobald der Fahrzeuganhänger abgestellt und dabei das Standlichtsystem von der Energiequelle des Zugfahrzeugs elektrisch getrennt wird, und automatisch in einen Fahrbetrieb zu schalten, in welchem das Standlichtsystem durch die Energiequelle des Zugfahrzeugs mit Strom versorgt wird, sobald der Fahrzeuganhänger mit dem Zugfahrzeug gekoppelt und dabei das Standlichtsystem mit der Energiequelle des Zugfahrzeugs elektrisch verbunden ist. Durch das automatische Umschalten kann auf eine manuelle Schaltanordnung für diese Zwecke verzichtet werden. Dies spart Platz und Gewicht. Dies ist insbesondere bei mobilen Anwendungen von Vorteil. Durch das automatische Umschalten kann außerdem verhindert werden, dass ein Nutzer, beispielsweise ein Fahrer des Zugfahrzeugs, vergisst, zwischen den beiden Betriebsmodi umzuschalten und sich das Standlichtsystem dadurch beispielsweise in einem Batteriemodus befindet, obwohl der Fahrzeuganhänger bereits am Zugfahrzeug angekoppelt ist. Das Umschaltmittel kann in Form eines Computerprogramms ausgestaltet sein oder ein Computerprogramm aufweisen. Das Computerprogramm ist bevorzugt im Steuergerät installiert. Das Computerprogramm kann als computerlesbarer Anweisungscode in jeder geeigneten Programmiersprache wie beispielsweise in JAVA oder C++ implementiert sein. Das Computerprogramm kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie das Steuergerät derart programmieren, dass die gewünschten Funktionen ausgeführt werden. Ferner kann das Computerprogramm in einem Netzwerk wie beispielsweise dem Internet bereitgestellt werden bzw. sein, von dem es bei Bedarf von einem Nutzer heruntergeladen werden kann. Das Computerprogramm kann sowohl mittels einer Software, als auch mittels einer oder mehrerer spezieller elektronischer Schaltungen, d.h. in Hardware in Form eines Computerprogrammprodukts, oder in beliebig hybrider Form, d.h. mittels Software-Komponenten und Hardware-Komponenten, realisiert werden bzw. sein.

Bei einem erfindungsgemäßen Standlichtsystem kann an der Steuerbox ferner wenigstens ein Kommunikationsanschluss zum Anschließen einer Ausleseeinheit zum Auslesen von Betriebsinformationen des Steuergeräts ausgestaltet sein. Dadurch, dass der Kommunikationsanschluss an der Steuerbox angeordnet ist, die sich vorzugsweise innerhalb des Fahrzeuganhängers, also für Passanten nicht direkt zugänglich, befindet, kann der Kommunikationsanschluss effektiv vor Vandalismus geschützt werden.

Die Steckverbindung kann bei einem Standlichtsystem gemäß der vorliegenden Erfindung einen 15-Pol Hella EasyConn-Anschluss oder einen Bajonettverschluss aufweisen. Genauer gesagt kann jede Steckverbindung mit einem 15-Pol Hella EasyConn-Anschluss oder einem Bajonettverschluss ausgestaltet sein. Mit Hilfe des 15-Pol Hella EasyConn-Anschlusses oder des Bajonettverschlusses lässt sich eine einfache und trotzdem zuverlässig haltende Steckverbindung realisieren.

Von weiterem Vorteil kann es sein, dass bei einem erfindungsgemäßen Standlichtsystem die Schaltanordnung eine Anzeigevorrichtung zum Anzeigen eines Betriebszustands des Standlichtsystems und/oder eines Ladezustands der Batterie aufweist. Da die Schaltanordnung vorzugsweis außen am Fahrzeuganhänger angeordnet ist, kann ein Nutzer des Systems mit einem Blick auf die Schaltanordnung schnell und einfach den Betriebszustand und/oder den Ladezustand erkennen. Dies dient auf einfache und kostengünstige Weise der Betriebssicherheit sowie einem reibungslosen Betrieb des Standlichtsystems. Die Anzeigevorrichtung kann in Form einer Leuchte und/oder eines leuchtenden Displays ausgestaltet sein. Die Anzeigevorrichtung kann entsprechend mehrteilig ausgestaltet sein. So kann der Betriebszustand beispielsweise über das Display angezeigt werden, während der Ladezustand über eine Leuchte angezeigt wird, die beispielsweise rot leuchtet, wenn der Ladezustand unter einem vordefinierten Schwellenwert gefallen ist und grün leuchtet, so lange der Ladezustand über dem vordefinierten Schwellenwert liegt.

Gemäß einer weiteren Ausgestaltungsvariante der vorliegenden Erfindung ist es möglich, dass bei einem Standlichtsystem die Schaltanordnung zum Verhindern einer unerlaubten Betätigung des wenigstens einen Schalters verschließbar ist. Durch die erfindungsgemäße Trennung von Steuerbox und Schaltanordnung kann die Schaltanordnung beispielsweise verschließbar, insbesondere mit einer Klappe verschließbar bzw. abschließbar, ausgestaltet sein, wohingegen die innerhalb des Fahrzeuganhängers integrierte Steuerbox nicht verschlossen werden muss. Dadurch können eine unerwünschte Betätigung der Schaltanordnung durch Passanten zuverlässig verhindert und gleichzeitig ein einfacher Zugriff auf die Steuerbox für beispielsweise Mechaniker oder den Fahrer des Zugfahrzeugs ermöglicht werden. Das Verschließen kann durch ein Schloss oder einen Code realisiert werden.

Gemäß einem weiteren Aspekt der vorliegenden Erfindung wird ein Fahrzeuganhänger mit einem wie vorstehend beschriebenen Standlichtsystem bereitgestellt, wobei die Schaltanordnung zum manuellen Ein- und Ausschalten der Lichtanordnung zumindest teilweise an einem Außenwandabschnitt des Fahrzeuganhängers angeordnet ist. Damit bringt ein erfindungsgemäßer Fahrzeuganhänger die gleichen Vorteile mit sich, wie sie ausführlich mit Bezug auf das erfindungsgemäße Standlichtsystem beschrieben worden sind. Unter der Anordnung am Außenwandabschnitt des Fahrzeuganhängers ist eine Anordnung zumindest teilweise außen am Fahrzeuganhänger zu verstehen. Der Außenwandabschnitt ist vorzugsweise ein Teil eines äußeren Seitenwandabschnitts des Fahrzeuganhängers. Die Steuerbox ist bevorzugt innerhalb des Fahrzeuganhängers, beispielsweise innen an einem Längsträger des Fahrzeuganhängers, angeordnet.

Außerdem ist es möglich, dass bei einem Fahrzeuganhänger gemäß der vorliegenden Erfindung die Steuerbox beabstandet von der Schaltanordnung sowie vom Außenwandabschnitt im Fahrzeuganhänger angeordnet ist. Diese getrennte Anordnung bringt die bereits vorstehend beschriebenen Vorteile mit sich.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Figuren wird die Erfindung nachfolgend näher erläutert. Dabei zeigen:
- Fig. 1: ein Standlichtsystem gemäß einer bevorzugten Ausführungsform der vorliegenden Erfindung, und
- Fig. 2: einen Fahrzeuganhänger mit einem Standlichtsystem gemäß einer bevorzugten Ausführungsform der vorliegenden Erfindung.

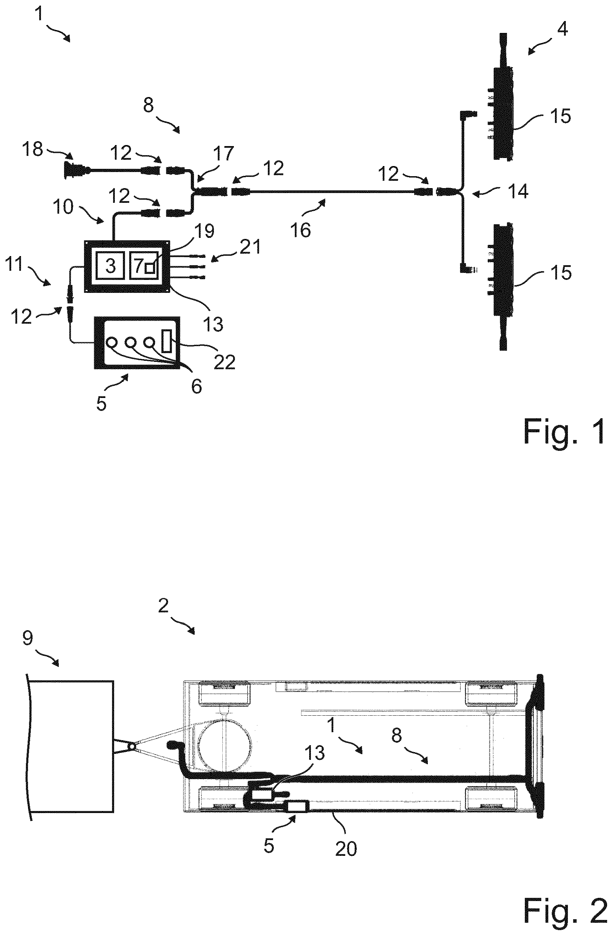

Elemente mit gleicher Funktion und Wirkungsweise sind in den Figuren 1 und 2 jeweils mit denselben Bezugszeichen versehen.

Fig. 1 zeigt ein Standlichtsystem 1 für einen abgestellten Fahrzeuganhänger 2, aufweisend eine Steuerbox 13 mit einer integrierten Batterie 3 zur Stromversorgung einer Lichtanordnung 4 des abgestellten Fahrzeuganhängers 2 sowie einem integrierten Steuergerät 7 zum Steuern und/oder Regeln der Lichtanordnung 4. Das Standlichtsystem 1 weist ferner eine Schaltanordnung 5 in Form einer Schaltbox mit drei Schaltern 6 zum manuellen Ein- und Ausschalten der Lichtanordnung 4 des abgestellten Fahrzeuganhängers 2 über das Steuergerät 7 auf. Mit den Schaltern 6 können verschiedene Leuchtmittel 15 in und an dem Fahrzeuganhänger 2 ein- und ausgeschaltet werden, wobei auch andere Funktionen mit den Schaltern 6 betätigt werden könnten.

Das Standlichtsystem 1 weist ferner eine Fahrzeugverbindungsleitung 8 für eine elektrische Verbindung zwischen der Lichtanordnung 4 und einer Energiequelle eines Zugfahrzeugs 9, eine Steuerboxverbindungsleitung 10 für eine elektrische Verbindung zwischen der Steuerbox 13 und der Fahrzeugverbindungsleitung 8, und eine Schaltanordnungverbindungsleitung 11 für eine elektrische Verbindung zwischen der Schaltanordnung 5 und der Steuerbox 13 auf. Die Steuerbox 13 ist mittels wenigstens einer manuell trennbaren Steckverbindung 12 zwischen, d.h., in Signal- und Stromrichtung zwischen, der Fahrzeugverbindungsleitung 8 und der Schaltanordnung 5 angeordnet.

Die Fahrzeugverbindungsleitung 8 weist eine Lichtverbindungsleitung 14 für eine elektrische Verbindung zu den Leuchtmitteln 15 der Lichtanordnung 4, eine Hauptversorgungsleitung 16, einen Y-förmigen Verbindungsadapter 17 und einen Hauptanschlussabschnitt 18 für eine elektrische Verbindung zwischen dem Standlichtsystem 1 und der Energiequelle des Zugfahrzeugs 9 auf. Zwischen der Lichtverbindungsleitung 14 und der Hauptversorgungsleitung 16, zwischen der Hauptversorgungsleitung 16 und dem Verbindungsadapter 17, zwischen dem Verbindungsadapter 17 und dem Hauptanschlussabschnitt 18, sowie zwischen dem Verbindungsadapter 17 und der Steuerboxverbindungsleitung 10 ist jeweils eine Steckverbindung 12 zum manuellen Herstellen und Trennen einer elektrischen Verbindung zwischen den jeweiligen Funktionsabschnitten ausgestaltet. Die Steckverbindungen 12 sind jeweils mit einem 15-Pol Hella EasyConn-Anschluss oder einem Bajonettverschluss ausgestaltet.

Das Steuergerät 7 weist ein Umschaltmittel 19 auf, das konfiguriert ist, automatisch in einen Abstellbetrieb zu schalten, in welchem das Standlichtsystem 1 durch die Batterie 3 mit Strom versorgt wird, sobald der Fahrzeuganhänger 2 abgestellt und dabei das Standlichtsystem 1 von der Energiequelle des Zugfahrzeugs 9 elektrisch getrennt wird, und automatisch in einen Fahrbetrieb zu schalten, in welchem das Standlichtsystem 1 durch die Energiequelle des Zugfahrzeugs 9 mit Strom versorgt wird, sobald der Fahrzeuganhänger 2 mit dem Zugfahrzeug 9 gekoppelt und dabei das Standlichtsystem 1 mit der Energiequelle des Zugfahrzeugs 9 elektrisch verbunden ist.

An der Steuerbox 13 ist wenigstens ein Kommunikationsanschluss 21 zum Anschließen einer Ausleseeinheit zum Auslesen von Betriebsinformationen des Steuergeräts 7 ausgestaltet. Wie in Fig. 1 dargestellt, weist die Schaltanordnung 5 eine Anzeigevorrichtung 22 in Form eines kleinen Displays zum Anzeigen eines Betriebszustands des Standlichtsystems 1 sowie eines Ladezustands der Batterie 3 auf. Die Schaltanordnung 6 ist zum Verhindern einer unerlaubten Betätigung des wenigstens einen Schalters 6 verschließbar ausgestaltet. Hierzu kann eine Klappe an der Schaltanordnung 6 angebracht sein, die mit einem Schloss und/oder einem Code verschließbar ist und dabei die Schalter 6 zum Schutz vor unberechtigtem Zugriff bedeckt.

Fig. 2 zeigt einen Fahrzeuganhänger 2 mit einem wie in Fig. 1 dargestellten Standlichtsystem 1. Wie in Fig. 2 dargestellt, ist die Schaltanordnung 5 zum manuellen Ein- und Ausschalten der Lichtanordnung 4 an einem Außenwandabschnitt 20 bzw. einer Seitenwand des Fahrzeuganhängers 2 angeordnet. Die Steuerbox 13 ist beabstandet von der Schaltanordnung 5 sowie vom Außenwandabschnitt 20 an einem Längsträger innerhalb des Fahrzeuganhängers 2 angeordnet. Gemäß der in Fig. 2 dargestellten bevorzugten Ausführungsform schaut von den Strom- und Datenkabeln nur der Hauptanschlussabschnitt 18 bzw. ein Stecker des Hauptanschlussabschnitts 18 aus dem Fahrzeuganhänger 2 heraus. D.h., am Fahrzeuganhänger 2 gibt es neben dem Hauptanschlussabschnitt 18 bzw. dem Stecker desselben keinen anderen offenen Stecker, der aus dem Fahrzeuganhänger 2 herausschaut.

Die Erfindung lässt neben den dargestellten Ausführungsformen weitere Gestaltungsgrundsätze zu. D.h., die Erfindung soll nicht auf die in den Figuren dargestellten Ausführungsformen beschränkt betrachtet werden.

### Bezugszeichenliste

- 1: Standlichtsystem
- 2: Fahrzeuganhänger
- 3: Batterie
- 4: Lichtanordnung
- 5: Schaltanordnung
- 6: Schalter
- 7: Steuergerät
- 8: Fahrzeugverbindungsleitung
- 9: Zugfahrzeug
- 10: Steuerboxverbindungsleitung
- 11: Schaltanordnungverbindungsleitung
- 12: Steckverbindung
- 13: Steuerbox
- 14: Lichtverbindungsleitung
- 15: Leuchtmittel
- 16: Hauptversorgungsleitung
- 17: Verbindungsadapter
- 18: Hauptanschlussabschnitt
- 19: Umschaltmittel
- 20: Außenwandabschnitt
- 21: Kommunikationsanschluss
- 22: Anzeigevorrichtung

## Patentansprüche

1. Standlichtsystem (1) für einen abgestellten Fahrzeuganhänger (2), aufweisend eine Steuerbox (13) mit einer integrierten Batterie (3) zur Stromversorgung einer Lichtanordnung (4) des abgestellten Fahrzeuganhängers (2) sowie einem integrierten Steuergerät (7) zum Steuern und/oder Regeln der Lichtanordnung (4), eine Schaltanordnung (5) mit wenigstens einem Schalter (6) zum manuellen Ein- und Ausschalten der Lichtanordnung (4) des abgestellten Fahrzeuganhängers (2) über das Steuergerät (7), eine Fahrzeugverbindungsleitung (8) für eine elektrische Verbindung zwischen der Lichtanordnung (4) und einer Energiequelle eines Zugfahrzeugs (9), eine Steuerboxverbindungsleitung (10) für eine elektrische Verbindung zwischen der Steuerbox (13) und der Fahrzeugverbindungsleitung (8), und eine Schaltanordnungverbindungsleitung (11) für eine elektrische Verbindung zwischen der Schaltanordnung (5) und der Steuerbox (13),
**dadurch gekennzeichnet, dass**
die Steuerbox (13) mittels wenigstens einer manuell trennbaren Steckverbindung (12) zwischen der Fahrzeugverbindungsleitung (8) und der Schaltanordnung (5) angeordnet ist.

2. Standlichtsystem (1) nach Anspruch 1,
**dadurch gekennzeichnet, dass**
die Fahrzeugverbindungsleitung (8) eine Lichtverbindungsleitung (14) für eine elektrische Verbindung zu Leuchtmitteln (15) der Lichtanordnung (4), eine Hauptversorgungsleitung (16), einen Verbindungsadapter (17) und einen Hauptanschlussabschnitt (18) für eine elektrische Verbindung zwischen dem Standlichtsystem (1) und der Energiequelle des Zugfahrzeugs (9) aufweist, wobei zwischen der Lichtverbindungsleitung (14) und der Hauptversorgungsleitung (16), zwischen der Hauptversorgungsleitung (16) und dem Verbindungsadapter (17), zwischen dem Verbindungsadapter (17) und dem Hauptanschlussabschnitt (18), und/oder zwischen dem Verbindungsadapter (17) und der Steuerboxverbindungsleitung (10) jeweils eine Steckverbindung (12) zum manuellen Herstellen und Trennen einer elektrischen Verbindung zwischen den jeweiligen Funktionsabschnitten ausgestaltet ist.

3. Standlichtsystem (1) nach einem der voranstehenden Ansprüche,
**dadurch gekennzeichnet, dass**
die Fahrzeugverbindungsleitung (8) eine Hauptversorgungsleitung (16), einen Y-förmigen oder im Wesentlichen Y-förmigen Verbindungsadapter (17) und einen Hauptanschlussabschnitt (18) zum elektrischen Verbinden des Standlichtsystems (1) mit der Energiequelle des Zugfahrzeugs (9) aufweist, wobei zwischen der Hauptversorgungsleitung (16) und dem Verbindungsadapter (17), zwischen dem Verbindungsadapter (17) und dem Hauptanschlussabschnitt (18), und/oder zwischen dem Verbindungsadapter (17) und der Steuergerätverbindungsleitung (10) jeweils eine Steckverbindung (12) zum manuellen Herstellen und Trennen einer elektrischen Verbindung zwischen den jeweiligen Funktionsabschnitten ausgestaltet ist.

4. Standlichtsystem (1) nach einem der voranstehenden Ansprüche,
**dadurch gekennzeichnet, dass**
das Steuergerät (7) ein Umschaltmittel (19) aufweist oder mit einem Umschaltmittel (19) des Standlichtsystems (1) in Signalverbindung steht, wobei das Umschaltmittel (19) konfiguriert ist, automatisch in einen Abstellbetrieb zu schalten, in welchem das Standlichtsystem (1) durch die Batterie (3) mit Strom versorgt wird, sobald der Fahrzeuganhänger (2) abgestellt und dabei das Standlichtsystem (1) von der Energiequelle des Zugfahrzeugs (9) elektrisch getrennt wird, und automatisch in einen Fahrbetrieb zu schalten, in welchem das Standlichtsystem (1) durch die Energiequelle des Zugfahrzeugs (9) mit Strom versorgt wird, sobald der Fahrzeuganhänger (2) mit dem Zugfahrzeug (9) gekoppelt und dabei das Standlichtsystem (1) mit der Energiequelle des Zugfahrzeugs (9) elektrisch verbunden ist.

5. Standlichtsystem (1) nach einem der voranstehenden Ansprüche,
**dadurch gekennzeichnet, dass**
an der Steuerbox (13) wenigstens ein Kommunikationsanschluss (21) zum Anschließen einer Ausleseeinheit zum Auslesen von Betriebsinformationen des Steuergeräts (7) ausgestaltet ist.

6. Standlichtsystem (1) nach einem der voranstehenden Ansprüche,
**dadurch gekennzeichnet, dass**
die Steckverbindung (12) einen 15-Pol Hella EasyConn-Anschluss aufweist.

7. Standlichtsystem (1) nach einem der voranstehenden Ansprüche,
**dadurch gekennzeichnet, dass**
die Schaltanordnung (5) eine Anzeigevorrichtung (22) zum Anzeigen eines Betriebszustands des Standlichtsystems (1) und/oder eines Ladezustands der Batterie (3) aufweist.

8. Standlichtsystem (1) nach einem der voranstehenden Ansprüche,
**dadurch gekennzeichnet, dass**
die Schaltanordnung (5) zum Verhindern einer unerlaubten Betätigung des wenigstens einen Schalters (6) verschließbar ist.

9. Fahrzeuganhänger (2) mit einem Standlichtsystem (1) nach einem der voranstehenden Ansprüche, wobei die Schaltanordnung (5) zum manuellen Ein- und Ausschalten der Lichtanordnung (4) zumindest teilweise an einem Außenwandabschnitt (20) des Fahrzeuganhängers (2) angeordnet ist.

10. Fahrzeuganhänger (2) nach Anspruch 9,
**dadurch gekennzeichnet, dass**
die Steuerbox (13) beabstandet von der Schaltanordnung (5) sowie vom Außenwandabschnitt (20) im Fahrzeuganhänger (2) angeordnet ist.

## Claims

1. Parking light system (1) for a parked vehicle trailer (2) featuring a control box (13) with an integrated battery (3) for supplying power to a light arrangement (4) of the parked vehicle trailer (2) and an integrated control unit (7) for controlling and/or regulating the light arrangement (4), a circuit arrangement (5) with at least one switch (6) for manually switching on and off the light arrangement (4) of the parked vehicle trailer (2) by means of the control unit (7), a vehicle connector cable (8) for an electrical connection between the light arrangement (4) and an energy source of a towing vehicle (9), a control box connector cable (10) for an electrical connection between the control box (13) and the vehicle connector cable (8) and a circuit arrangement connector cable (11) for and electrical connection between the circuit arrangement (5) and the control box (13),
**characterized in that**
the control box (13) is arranged by means of at least one manually separable plug connection (12) between the vehicle connector cable (8) and the circuit arrangement (5).

2. Parking light system (1) in accordance with Claim 1,
**characterized in that**
the vehicle connector cable (8) features a light connector cable (14) for an electrical connection to light sources (15) of the light arrangement (4), a main supply cable (16), a connector adapter (17) and a main connection section (18) for an electrical connection between the parking light system (1) and the energy source of the towing vehicle (9), where the designs entails in each case between the light connection cable (14) and the main supply cable (16), between the main supply cable (16) and the connector adapter (17), between the connector adapter (17) and the main connection section (18), and/or between the connector adapter (17) and the control box connector cable (10) a plug connection (12) for manually creating and separating an electrical connection between the respective functional sections.

3. Parking light system (1) in accordance with one of the above Claims,
**characterized in that**
the vehicle connector cable (8) features a main supply cable (16), a V-shaped or essentially V-shaped connector adapter (17) and a main connection section (18) to electrically connect the parking light system (1) with the energy source of the towing vehicle (9), where the design entails in each case between the main supply cable (16) and the connector adapter (17), between the connector adapter (17) and the main connection section (18) and/or between the connector adapter (17) and the control unit connector cable (10) a plug connection (12) for manually creating or separating an electrical connection between the respective functional sections.

4. Parking light system (1) in accordance with one of the above Claims,
**characterized in that**
the control unit (7) features a switch (19) or is linked by a signal connection to a switch (19) of the parking light system (1), where the switch (19) is configured to automatically switch into parking mode in which the parking light system (1) is supplied by power from the battery (3) as soon as the vehicle trailer (2) is parked and in this context the parking light system (1) is electrically disconnected from the energy source of the towing vehicle (9), and to automatically switch into a driving mode in which the parking light system (1) is supplied with power from the energy source of the towing vehicle (9) as soon as the vehicle trailer (2) is coupled to the towing vehicle (9) and in this context the parking light system (1) is electrically connected to the energy source of the towing vehicle (9).

5. Parking light system (1) in accordance with one of the above Claims,
**characterized in that**
the design at the control box (13) entails at least one communications connection (21) for connecting a read-out unit for reading operating information out of the control unit (7).

6. Parking light system (1) in accordance with one of the above Claims,
**characterized in that**
the plug connection (12) features a 15 pole Hella EasyConn connection.

7. Parking light system (1) in accordance with one of the above Claims,
**characterized in that**
the circuit arrangement (5) features a display device (22) for displaying an operating mode of the parking light system (1) and/or a charging level of the battery (3).

8. Parking light system (1) in accordance with one of the above Claims,
**characterized in that**
the circuit arrangement (5) is lockable to prevent unauthorized actuation of the at least one switch (6).

9. Vehicle trailer (2) with a parking light system (1) in accordance with one of the above Claims, where the circuit arrangement (5) is arranged at least partially on an exterior wall section (20) of the vehicle trailer (2) for manually switching the light arrangement (4) on and off.

10. Vehicle trailer (2) in accordance with Claim 9,
**characterized in that**
the control box (13) is arranged at a distance from the circuit arrangement (5) and from the exterior wall section (20) in the vehicle trailer (2).

## Revendications

1. Système de feux de position (1) pour une remorque de véhicule garée (2), comprenant un boîtier de commande (13) avec batterie intégrée (3) pour l'alimentation électrique d'un dispositif d'éclairage (4) de la remorque de véhicule garée (2) et un boîtier de commande intégré (7) pour la commande et/ou la régulation du dispositif d'éclairage (4), un dispositif de commutation (5) avec au moins un interrupteur (6) pour l'allumage et l'extinction manuels du dispositif d'éclairage (4) de la remorque de véhicule garée (2) par l'intermédiaire du boîtier de commande (7), un câble de raccordement de véhicule (8) pour établir une liaison électrique entre le dispositif d'éclairage (4) et une source d'énergie d'un véhicule tracteur (9), un câble de raccordement de boîtier de commande (10) pour établir une liaison électrique entre le boîtier de commande (13) et le câble de raccordement de véhicule (8), ainsi qu'un câble de raccordement de dispositif de commutation (11) pour établir une liaison électrique entre le dispositif de commutation (5) et le boîtier de commande (13),
**caractérisée en ce que**
le boîtier de commande (13) est disposé entre le câble de raccordement du véhicule (8) et le dispositif de commutation (5) au moyen d'au moins un connecteur enfichable (12) pouvant être déconnecté manuellement.

2. Système de feux de position (1) selon la revendication 1,
**caractérisée en ce que**
le câble de raccordement du véhicule (8) comporte un câble de raccordement de l'éclairage (14) pour établir une liaison électrique à des ampoules (15) du dispositif d'éclairage (4), un câble d'alimentation principal (16), un adaptateur de connexion (17) et une section de raccordement principale (18) pour établir une liaison électrique entre le système de feux de position (1) et la source d'énergie du véhicule tracteur (9), sachant qu'un connecteur enfichable (12) permettant d'établir et de couper manuellement la liaison électrique entre les sections fonctionnelles correspondantes est monté entre le câble de raccordement de l'éclairage (14) et le câble d'alimentation principal (16), entre le câble d'alimentation principal (16) et l'adaptateur de connexion (17), entre l'adaptateur de connexion (17) et la section de raccordement principal (18) et/ou entre l'adaptateur de connexion (17) et le câble de raccordement du boîtier de commande (10).

3. Système de feux de position (1) selon l'une des revendications ci-dessus,
**caractérisée en ce que**
le câble de raccordement du véhicule (8) présente un câble d'alimentation principal (16), un adaptateur de connexion (17) en forme de V ou sensiblement en forme de V et une section de raccordement principal (18) pour l'établissement d'une liaison électrique du système de feux de position (1) et la source d'énergie du véhicule tracteur (9), sachant qu'un connecteur enfichable (12) permettant d'établir et de couper manuellement la liaison électrique entre les sections fonctionnelles correspondantes est monté entre le câble d'alimentation principal (16) et l'adaptateur de connexion (17), entre l'adaptateur de connexion (17) et la section de raccordement principal (18) et/ou entre l'adaptateur de connexion (17) et le câble de raccordement du boîtier de commande (10).

4. Système de feux de position (1) selon l'une des revendications ci-dessus,
**caractérisée en ce que**
le boîtier de commande (7) présente un moyen de commutation (19) ou est relié par un moyen de signalisation à un moyen de commutation (19) du système de feux de position (1), le moyen de commutation (19) étant configuré pour passer automatiquement à un mode de stationnement dans lequel le système de feux de position (1) est alimenté en courant par la batterie (3) dès que la remorque du véhicule (2) est garée et que le système de feux de position (1) est déconnecté électriquement de la source d'énergie du véhicule tracteur (9) et la commutation automatique vers un mode de conduite dans lequel le système de feux de position (1) est alimenté en énergie par la source d'énergie du véhicule tracteur (9) dès que la remorque du véhicule (2) est couplée au véhicule tracteur (9) et que le système de feux de position (1) est connecté électriquement à la source d'énergie du véhicule tracteur (9).

5. Système de feux de position (1) selon l'une des revendications ci-dessus,
**caractérisée en ce que**
le boîtier de commande (13) comporte au moins un raccord de communication (21) permettant de raccorder une unité de lecture des informations d'exploitation du boîtier de commande (7).

6. Système de feux de position (1) selon l'une des revendications ci-dessus,
**caractérisée en ce que**
le connecteur (12) est doté d'un raccord à 15 pôles Hella EasyConn.

7. Système de feux de position (1) selon l'une des revendications ci-dessus,
**caractérisée en ce que**
le dispositif de commutation (5) comprend un dispositif d'affichage (22) pour afficher un état de fonctionnement du système de feux de position (1) et/ou un état de charge de la batterie (3).

8. Système de feux de position (1) selon l'une des revendications ci-dessus,
**caractérisée en ce que**
le dispositif de commutation (5) pour empêcher un actionnement non autorisé au moins de l'interrupteur (6) est verrouillable.

9. Remorque de véhicule (2) équipée d'un système de feux de position (1) selon l'une des revendications précédentes, le dispositif de commutation (5) pour allumer et éteindre manuellement le dispositif d'éclairage (4) monté au moins partiellement sur une section de paroi extérieure (20) de la remorque de véhicule (2).

10. Système d'éclairage (2) selon la revendication 9,
**caractérisée en ce que**
le boîtier de commande (13) est disposé à distance du dispositif de commutation (5), ainsi que de la section de paroi extérieure (20) dans la remorque de véhicule (2).
